# FASCICULE DE BREVET EUROPEEN

(11) **EP 3 760 484 B1**
(45) Date de publication et mention de la délivrance du brevet: **23.11.2022**
(21) Numéro de dépôt: 20182191.5
(22) Date de dépôt: 25.06.2020
(51) Int. Cl.: B60Q 1/26, B60Q 1/30, B62D 35/00

(54) **LAME ARRIÈRE MOBILE ÉCLAIRANTE COMPRENANT UNE SOURCE DE LUMIÈRE FIXE**
BEWEGLICHES RÜCKSEITIGES RÄUMSCHILD MIT BELEUCHTUNG, DAS EINE FESTE LICHTQUELLE UMFASST
LIGHTING MOBILE REAR BLADE COMPRISING A STATIONARY LIGHT SOURCE

(30) Priorité: 01.07.2019 FR 1907287
(43) Date de publication de la demande: 06.01.2021
(73) Titulaire: Compagnie Plastic Omnium, 69007 Lyon (FR)
(72) Inventeur: UTTER, Jérôme, 01150 Sainte-Julie (FR); KHAYAT, Issam, 01150 Sainte-Julie (FR)
(74) Mandataire: LLR

(56) Documents cités:
- DE-A1-102008 011 198
- DE-A1-102016 206 531
- DE-T5-112016 004 895
- FR-A1- 2 896 759
- FR-A1- 3 064 584
- JP-U- H0 713 582
- US-A1- 2018 281 669

## Description

L'invention concerne le domaine des dispositifs aérodynamiques embarqués sur les véhicules automobiles.

Ces dispositifs, en forme de becquet prolongeant la forme du toit, ont pour objet de procurer un appui aérodynamique supplémentaire sur l'essieu arrière et/ou de réduire la trainée aérodynamique du véhicule lorsque ce dernier roule à grande vitesse.

Dans le but de renforcer la visibilité arrière du véhicule, en particulier lorsque le véhicule ralentit sa vitesse en freinant, il est connu d'équiper le becquet d'un dispositif lumineux s'étendant sur toute ou partie de la longueur transversale du becquet fixe et s'allumant en même temps que les feux stop du véhicule. Ce dispositif lumineux est placé en règle générale au niveau du bord de fuite du becquet.

De tels dispositifs sont décrits à titre d'exemple dans le document DE 20 2006 010 701 ou encore dans le document FR 2 932 767.

Pour améliorer l'effet aérodynamique, les constructeurs proposent de rendre le becquet mobile, comme décrit, par exemple dans le document FR 3 054 584.

Ainsi, les documents DE 10 2016 206 531, US 5 923 245, ou encore le document US 5 119 068, décrivent un aileron comportant un dispositif lumineux disposé sur le bord de fuite et mobile en rotation autour d'un axe transversal entre une position repliée et une position déployée, de manière à moduler l'angle d'incidence du becquet et augmenter ainsi les appuis verticaux au niveau de l'arrière du véhicule. Par ailleurs le document DE 11 2016 004 895 T5 décrit un dispositif conforme au préambule de la revendication 1.

Ces dispositifs présentent toutefois l'inconvénient de ne pas rendre visible le dispositif lumineux lorsque l'aileron est en position repliée. En effet, l'angle d'éclairage du dispositif lumineux varie en fonction de l'angle d'incidence de l'aileron et rend ce dispositif lumineux inopérant lorsque l'angle d'incidence est réduit, ce qui conduit à désactiver le dispositif lumineux lorsque l'aileron n'est pas déployé.

Les développements récents pour améliorer le coefficient aérodynamique du véhicule conduisent les constructeurs à proposer des ailerons arrière comportant un becquet fixe et une partie mobile en translation, encore dénommée lame mobile, coulissant dans la partie fixe du becquet dans le sens longitudinal du véhicule de manière à prolonger vers l'arrière la partie fixe. Cette extension de surface vers l'arrière réalisée par la lame mobile permet de réduire les turbulences et améliore ainsi l'aérodynamique au niveau de la partie arrière du véhicule.

Ces dispositifs en translation le long de la direction longitudinale du véhicule ont un effet aérodynamique sensible, y compris à faible vitesse, par exemple dès 70 km/h. Ils permettent en outre de diminuer la trainée du véhicule sans incidence notable sur l'appui arrière.

La présente invention a notamment pour but de proposer une solution technique pour équiper ce nouveau dispositif aérodynamique de moyens lumineux visibles depuis l'arrière du véhicule dans toutes les configurations d'usage.

Le dispositif aérodynamique pour véhicule automobile selon l'invention comprend un becquet fixe solidaire de la carrosserie et une lame mobile coulissant dans l'espace intérieur du becquet fixe selon un axe longitudinal entre une position retractée et une position déployée dans le prolongement arrière du becquet fixe.

Ce dispositif aérodynamique se caractérise en ce que la lame mobile comporte au moins un guide de lumière diffusant comprenant au moins une piste d'entrée de la lumière s'étendant longitudinalement et une ou plusieurs surfaces de sortie de la lumière disposées sur une surface de la lame mobile visible depuis l'extérieur du véhicule, et en ce qu'une ou plusieurs sources de lumière sont disposées sur une paroi interne dudit espace intérieur du becquet fixe, en vis-à-vis et à proximité immédiate de chacune des pistes d'entrée de la lumière.

Placé de la sorte, le dispositif lumineux présente un angle d'incidence autour de l'axe transversal sensiblement constant et reste visible depuis l'arrière du véhicule quelle que soit la position déployée ou rétractée de la lame mobile. Il peut donc être rendu actif quelle que soit la vitesse du véhicule tout en respectant les plages angulaires et les intensités d'éclairage strictes, notamment prescrites par les normes ECE R48 et ECE R7.

Par ailleurs, l'alimentation électrique des sources fixes de lumière peut se faire en disposant des chemins de câble fixés sur la paroi interne du becquet fixe.

L'invention prévoit également d'autres caractéristiques optionnelles prises seules ou en combinaison :

Une ou plusieurs surfaces de sortie de la lumière sont disposées sur un bord de fuite de la lame mobile.

Au moins une source de lumière est disposée en vis-à-vis d'une paroi latérale de la lame mobile.

Au moins une source de lumière est disposée en vis-à-vis d'une paroi inférieure de la lame mobile.

La longueur et la position longitudinale des pistes d'entrée de la lumière sont disposées de sorte que, en position déployée, les pistes d'entrée de la lumière sont entièrement disposées dans l'espace intérieur du becquet fixe.

Le au moins un guide de lumière diffusant est recouvert sur l'intégralité de sa surface, à l'exception de la piste d'entrée de la lumière et des surfaces de sortie de la lumière, d'une ou plusieurs couches de revêtement ne laissant pas passer la lumière.

Le revêtement comprend une première couche réfléchissant la lumière vers l'intérieur du guide de lumière diffusant.

Le revêtement comprend des interruptions localisées formant des motifs par lesquelles la lumière émerge vers la surface extérieure de la lame mobile pour former des motifs lumineux.

Le matériau formant le au moins un guide de lumière diffusant est distinct du matériau formant une partie structurelle de la lame mobile.

La partie structurelle de la lame mobile est formée d'un matériau thermoplastique surmoulé sur le au moins un guide de lumière diffusant.

La partie structurelle de la lame mobile et le au moins un guide de lumière diffusant sont formés chacun d'un matériau thermoplastique et sont réalisés par bi-injection.

La lame mobile est formée dans son intégralité d'un matériau faisant office de guide de lumière diffusant.

Au moins une verrine de protection en matière transparente est disposée sur les surfaces de sortie de la lumière pour protéger lesdites surfaces de sortie de la lumière des agressions extérieures.

Une partie structurelle de la lame mobile est formée d'un matériau thermoplastique surmoulée sur la verrine de protection.

La ou les sources de lumière sont collimatées, de sorte que les rayons lumineux pénètrent dans le au moins un guide de lumière diffusant perpendiculairement à la surface de ladite piste d'entrée de la lumière.

La ou les sources de lumière sont formées par des diodes électroluminescentes.

### Brève description des figures

L'invention sera mieux comprise à la lecture de la description qui va suivre donnée uniquement à titre d'exemple et faite en se référant aux dessins annexés dans lesquels :
[Fig. 1] La figure 1 est une vue schématique en perspective d'un dispositif aérodynamique selon un premier mode de réalisation de l'invention, lorsque la lame mobile est en position rétractée.
[Fig. 2] La figure 2 est une vue schématique en perspective du dispositif aérodynamique, lorsque la lame mobile est en position déployée et que la source de lumière est activée.
[Fig. 3] La figure 3 est une vue schématique simplifiée en coupe transversale, selon un premier mode de réalisation du dispositif aérodynamique, lorsque la lame mobile est en position rétractée.
[Fig. 4] La figure 4 est une vue schématique simplifiée de dessus, selon le premier mode de réalisation ci-dessus, du dispositif aérodynamique, lorsque la lame mobile est en position rétractée.
[Fig. 5] La figure 5 est une vue schématique simplifiée en coupe du dispositif aérodynamique selon le premier mode de réalisation, lorsque la lame mobile est en position rétractée et que la source de lumière est activée.
[Fig. 6] La figure 6 est une vue schématique simplifiée de dessus du dispositif aérodynamique selon le premier mode de réalisation, lorsque la lame mobile est en position rétractée et que la source de lumière est activée.
[Fig. 7] La figure 7 est une vue schématique simplifiée en coupe du dispositif aérodynamique selon le premier mode de réalisation, lorsque la lame mobile est en position déployée et que la source de lumière est activée.
[Fig. 8] La figure 8 est une vue schématique simplifiée de dessus du dispositif aérodynamique selon le premier mode de réalisation, lorsque la lame mobile est en position déployée et que la source de lumière est activée.
[Fig. 9] La figure 9 est une vue schématique simplifiée de dessus, selon une variante du premier mode de réalisation du dispositif aérodynamique, lorsque la lame mobile est en position rétractée et que la source de lumière est activée.
[Fig. 10] La figure 10 est une vue schématique simplifiée de dessus, selon la variante du premier mode de réalisation du dispositif aérodynamique, lorsque la lame mobile est en position déployée et que la source de lumière est activée.
[Fig. 11] La figure 11 est une vue schématique simplifiée en coupe, selon un deuxième mode de réalisation du dispositif aérodynamique, lorsque la lame mobile est en position rétractée.
[Fig. 12] La figure 12 est une vue schématique simplifiée de dessus, selon le deuxième mode de réalisation du dispositif aérodynamique, lorsque la lame mobile est en position rétractée.
[Fig. 13] La figure 13 est une vue schématique simplifiée en coupe, selon le deuxième mode de réalisation du dispositif aérodynamique, lorsque la lame mobile est en position rétractée et que la source de lumière est activée.
[Fig. 14] La figure 14 est une vue schématique simplifiée de dessus, selon le deuxième mode de réalisation du dispositif aérodynamique, lorsque la lame mobile est en position rétractée et que la source de lumière est activée.
[Fig. 15] La figure 15 est une vue schématique simplifiée en coupe, selon le deuxième mode de réalisation du dispositif aérodynamique, lorsque la lame mobile est en position déployée et que la source de lumière est activée.
[Fig. 16] La figure 16 est une vue schématique simplifiée de dessus, selon le deuxième mode de réalisation du dispositif aérodynamique, lorsque la lame mobile est en position déployée et que la source de lumière est activée.
[Fig. 17] La figure 17est une vue schématique en perspective selon le deuxième mode de réalisation du dispositif aérodynamique lorsque la lame mobile est en position déployée et que la source de lumière est activée.

### Description détaillée

Dans ce qui suit, on se réfèrera au repère XYZ du véhicule dans lequel l'axe longitudinal X'X est orienté de l'arrière vers l'avant du véhicule. Dans un plan horizontal, l'axe transversal Y'Y est perpendiculaire à l'axe longitudinal. L'axe Z'Z représente l'axe vertical perpendiculaire aux axes X'X et Y'Y.

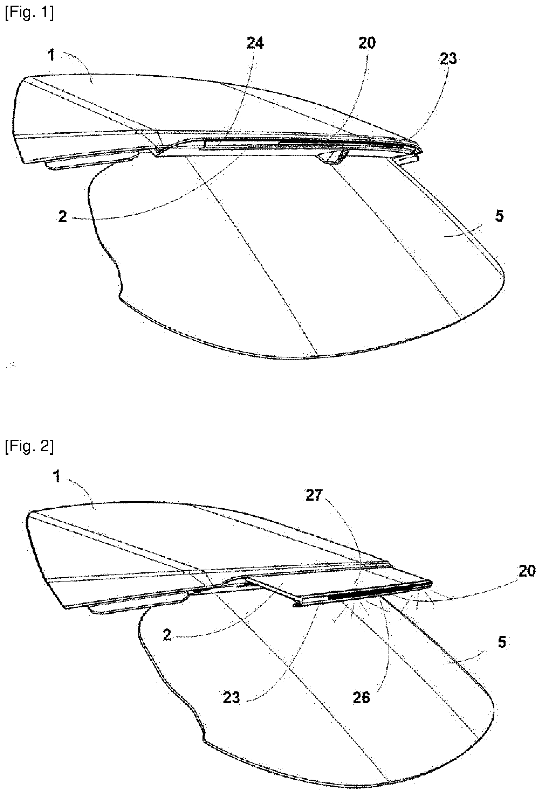

La figure 1 représente une partie arrière de véhicule automobile. Un becquet fixe 1 est disposé dans le prolongement du toit (non représenté) et s'étend vers l'arrière au-dessus de la vitre arrière 5.

La lame mobile 2 est en position rétractée dans l'espace intérieur du becquet fixe 1. Seule l'extrémité arrière, matérialisant la partie arrière du dispositif lumineux 20 et disposée sur le bord de fuite 23 de la lame mobile 2, est visible depuis l'extérieur du véhicule.

De manière optionnelle, une verrine transparente 24 recouvre le dispositif lumineux pour le protéger des agressions extérieures.

La figure 2 représente la même partie arrière du véhicule dans laquelle la lame mobile 2 est en position déployée. Le dispositif lumineux 20 émet de la lumière depuis le bord de fuite 23 de la lame mobile 2.

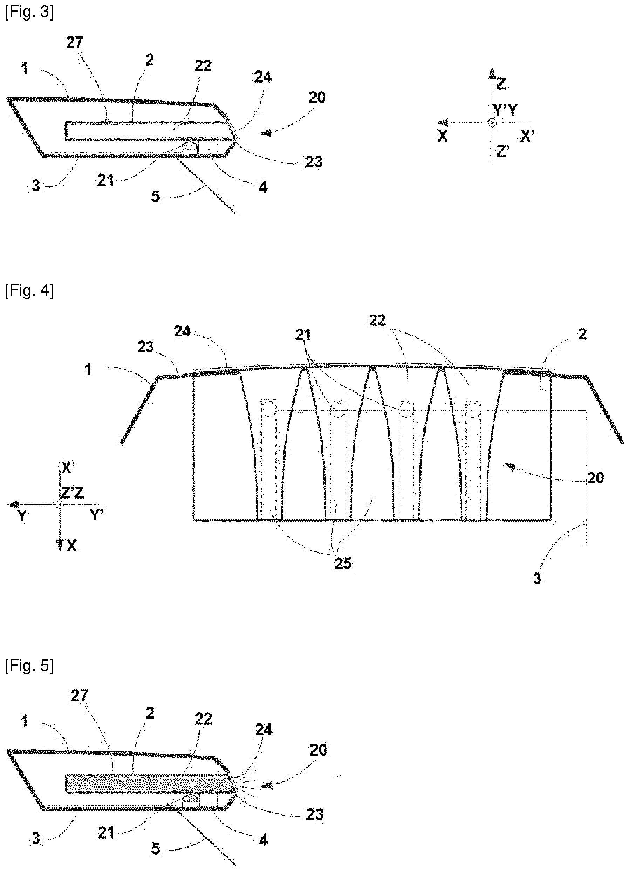

Les figures 3 à 10 représentent un dispositif aérodynamique selon un premier mode de réalisation de l'invention dans lequel le dispositif lumineux est formé d'un ou plusieurs guides de lumière diffusant 22.

Les figures 3 et 4 permettent de visualiser les positions dans l'espace, par rapport au repère défini XYZ ci-dessus des lames mobiles représentées aux figures 3 et 4 et suivantes.

Le guide de lumière 22 se présente sous la forme d'un élément transparent ou translucide comprenant une surface d'entrée de la lumière, et une surface de sortie de la lumière et constitué d'une matière telle que du plastique transparent ayant un indice de réfraction plus élevé que le milieu ambiant, en règle générale que l'air ambiant, dans lequel il est destiné à être immergé.

Dans les guides de lumière non diffusants, les rayons lumineux admis dans le guide de lumière par la surface d'entrée atteignent une paroi interne du guide de lumière en faisant un angle donné par rapport à la normale de la surface atteinte. Lorsque cet angle est supérieur à un angle de seuil déterminé, il est réfléchi à l'intérieur du guide de lumière. Les rayons lumineux se propagent alors dans le guide de lumière par réflexions successives sur les parois internes pour arriver vers la surface de sortie au niveau de laquelle on s'arrange pour qu'ils atteignent les parois internes avec un angle d'incidence, par rapport à la normale à la paroi, inférieur à une valeur de seuil, de sorte qu'ils émergent par réfraction vers l'extérieur du dispositif.

La réalisation d'un guide de lumière diffusant peut faire appel à des technologies différentes et connues en tant que telles. Une première technique, que l'on utilisera de manière préférentielle pour la mise en œuvre de l'invention, consiste à doper le matériau formant le guide de lumière à l'aide de particules réfléchissantes de taille microscopique. Les rayons lumineux progressent alors depuis la surface d'entrée de la lumière, se diffusent dans tout le guide de lumière et ressortent par l'ensemble des surfaces du guide de lumière. Cette technologie permet de rendre plus uniforme la diffusion de la lumière et ne nécessite pas d'arrangements particuliers entre les surfaces d'entrée de la lumière et les surfaces de sortie de la lumière.

Une autre technique consiste à traiter les surfaces du guide de lumière considérées comme surfaces de sortie, de manière à les rendre rugueuses ou dépolies. Les rugosités forment alors autant de surfaces élémentaires permettant à une partie de la lumière de s'échapper du guide de lumière vers l'extérieur. Cette technologie peu onéreuse permet de ne rendre diffusante que la seule partie du guide de lumière servant à l'éclairage.

Les matériaux couramment employés pour les guides de lumière sont des polymères, généralement thermoplastiques, choisis préférentiellement dans le groupe constitué par les polymères ou les copolymères amorphes tels que les polyacryliques, les polyesters, les polycarbonates, les polyéthers sulfones ou poly set époxy siloxanes et les polymères d'oléfines cycliques.

On observera ici, en référence aux figures 3 à 10, que le nombre de guides de lumière diffusants 22 n'est pas limitatif et que le dispositif lumineux 20 peut tout aussi bien comprendre un seul ou plusieurs guides de lumière 22 collaborant avec une ou plusieurs sources de lumière.

Chaque guide de lumière comporte une surface d'entrée de la lumière, dénommée ici piste d'entrée de la lumière 25, s'étendant selon la direction longitudinale.

Une source de lumière 21 est disposée de manière fixe sur une paroi interne du becquet fixe 1, en vis-à-vis et à proximité immédiate de chacune des pistes d'entrée de la lumière 25. On entend ici par proximité immédiate les quelques millimètres séparant la piste d'entrée de la lumière 25 de la source de lumière 21 qui lui est appairée, et qui sont nécessaires pour permettre le déplacement longitudinal de la lame mobile 2 sans occasionner de frottements parasites entre la piste d'entrée de la lumière 25 et la source de lumière 21.

Dans le cas illustré aux figures 3 à 10, la source de lumière est disposée sur la paroi inférieure de la cavité interne du becquet fixe 1. Les pistes d'entrée de la lumière sont donc disposées sur la paroi inférieure de la lame mobile 2.

Les sources de lumière 21 sont reliées à une alimentation électrique 3 également disposée sur la paroi inférieure de la cavité interne du becquet fixe 1.

Ces sources de lumière 2 peuvent par exemple être formées par des diodes électroluminescentes ou encore des sources laser.

Chaque guide de lumière comprend une ou plusieurs surfaces de sortie de la lumière 26, de sorte que la lumière se propage dans le guide de lumière 22 entre la ou les sources de lumière 21 et les surfaces de sortie de la lumière 26.

Un groupe motorisé 4 permet d'entrainer la lame mobile 2 le long de l'axe longitudinal XX', vers l'avant ou vers l'arrière. Ce groupe motorisé 4 peut par exemple comporter un système à vis sans fin.

La partie du guide de lumière, émergeant vers l'arrière de la lame mobile 2 et disposée sur le bord de fuite 23 de la lame mobile 2, constitue une surface de sortie de la lumière.

Aux figures 3 et 4, la lame mobile 2 est en position rétractée. Les sources de lumière 21 sont éteintes.

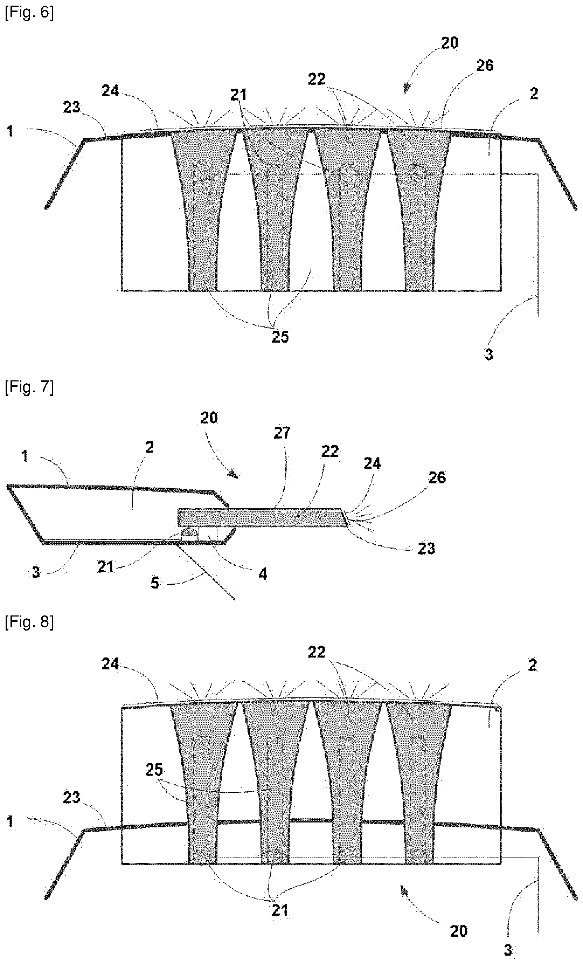

Les figures 5 et 6 représentent le dispositif aérodynamique dans la même position retractée que précédemment lorsque les sources de lumière sont activées (en couleur grisée).

La surface de sortie de la lumière 26 disposée sur le bord de fuite peut prendre la forme d'un trait lumineux continu s'étendant sur tout ou partie du bord de fuite 23, comme cela est également représenté à la figure 2

Il est également tout à fait possible, en aménageant à dessein la surface de sortie du guide de lumière, de réaliser des effets lumineux variés tels que, par exemple, un effet de facettes, une ligne lumineuse en pointillé présentant des interruptions, ou encore un effet dans lequel la lumière apparait sous forme de points lumineux donnant l'apparence d'une surface pixélisée.

Les figures 7 et 8 représentent le dispositif aérodynamique lorsque la lame mobile est déployée vers l'arrière selon la direction longitudinale et que les sources de lumière sont activées.

Il est utile de faire observer ici que l'angle d'incidence autour de l'axe transversal YY' du dispositif lumineux 20 ne change pas lorsque la lame mobile 2 passe de la position déployée à la position rétractée et inversement. Le flux de lumière émis vers l'arrière du véhicule par le dispositif lumineux 20 reste donc sensiblement constant, quelle que soit la position de la lame mobile 2.

La partie structurelle de la lame mobile 2 est réalisée préférentiellement par moulage d'une matière thermoplastique telle que du polypropylène (PP) chargé ou non, du polyamide (PA), du polycarbonate (PC), du polymétacrylate de méthyle (PMMA) ou encore du polytéréphtalate de butylène (PBT). On entend ici par partie structurelle la partie de la lame mobile conférant à cette dernière sa forme générale et sa résistance aux efforts aérodynamiques et d'actionnement.

Il peut donc s'avérer particulièrement utile et rentable de surmouler simultanément la partie structurelle de la lame mobile sur le ou les guides de lumière diffusant 22 et sur la verrine de protection 24 ou de réaliser ces pièces par bi-injection en une seule opération.

Une alternative de réalisation consiste à réaliser la partie structurelle de la lame mobile 2 dans un matériau diffusant apte à conduire la lumière, pour combiner la partie structurelle et le guide de lumière dans une pièce unique venue de matière.

Pour réaliser cette pièce unique, les matériaux suivants peuvent convenir : polypropylène naturel translucide, cyclo oléfines copolymères (COC), polyéthylène (PE), polyamide (PA), polycarbonate (PC), acrylonitrile butadiène styrène (ABS), mélange de polycarbonate (PC), acrylonitrile butadiène styrène (ABS), polystyrène (PS) et polyméthacrylate de méthyle (PMMA).

Une fois l'opération de moulage terminée, on recouvre l'ensemble de la pièce d'une ou plusieurs couches de revêtement opaque 27 ne laissant pas passer la lumière en prenant soin de ne pas recouvrir les pistes d'entrée de la lumière 25 placées en vis-à-vis des sources de lumière 21 et la surface de sortie placée au niveau du bord de fuite 23. Ce revêtement 27 peut être formé, à titre d'exemple, d'une ou plusieurs couches de peinture. Une alternative de réalisation peut également consister à recouvrir la pièce d'un film adhésif opaque.

On mettra utilement en œuvre à cet effet les techniques connues de marouflage ou de grattage des surfaces à l'aide d'un rayon laser.

On observera ici que, lorsque la source de lumière 21 est activée, l'ensemble du volume du guide de lumière diffusant 22 est éclairé et l'ensemble des parois du guide de lumière diffusant constitue potentiellement une surface de sortie de la lumière.

Bien que le nombre et la disposition des surfaces de sortie ne soit pas limitatif, on cherchera toutefois, pour éviter l'éblouissement des véhicules se présentant par l'arrière, à limiter les surfaces de sortie de la lumière aux seules surfaces de l'enveloppe extérieure du guide de lumière diffusant où il nécessaire de faire émerger la lumière.

A cet effet, on pourra recouvrir les surfaces non destinées à faire émerger la lumière d'une enveloppe opaque qui peut être constituée de la matière formant la partie structurelle de la lame mobile ou d'une ou plusieurs couches de revêtement opaque 27, comme cela est décrit ci-dessus.

Dans le but de renforcer le rendement lumineux du dispositif 20, une première couche de revêtement 27 située directement au contact de la paroi du guide de lumière 22 pourra utilement être formée d'un matériau réfléchissant la lumière vers l'intérieur du guide de lumière diffusant 22.

Toutefois, la piste d'entrée de la lumière 25, qui n'est pas recouverte, constitue nécessairement une surface de sortie de la lumière potentiellement visible de l'extérieur lorsque la lame mobile 2 est en position déployée. Emise depuis la paroi inférieure de la lame mobile telle que représentée aux figures 3 à 8, cette lumière peut engendrer des reflets parasites sur la vitre arrière 5.

Il peut donc s'avérer utile de réduire la largeur dans le sens transversal des pistes d'entrée de la lumière 25 en recouvrant la face inférieure de la lame mobile et/ou du guide de lumière 22 d'une ou plusieurs couches de revêtement opaque 27 selon l'une des techniques décrites ci-dessus. La largeur de la piste d'entrée de la lumière 25 peut donc être réduite à la seule largeur utile pour laisser pénétrer la lumière dans le guide de lumière diffusant 22.

Aussi, préférentiellement, la source de lumière délivre une lumière collimatée arrangée de sorte que les rayons lumineux pénètrent dans le guide de lumière 22 perpendiculairement à la surface de la piste d'entrée de la lumière 25. Cette disposition permet alors de réduire la largeur de la piste d'entrée de lumière 25 à la seule largeur du rayon de lumière collimatée.

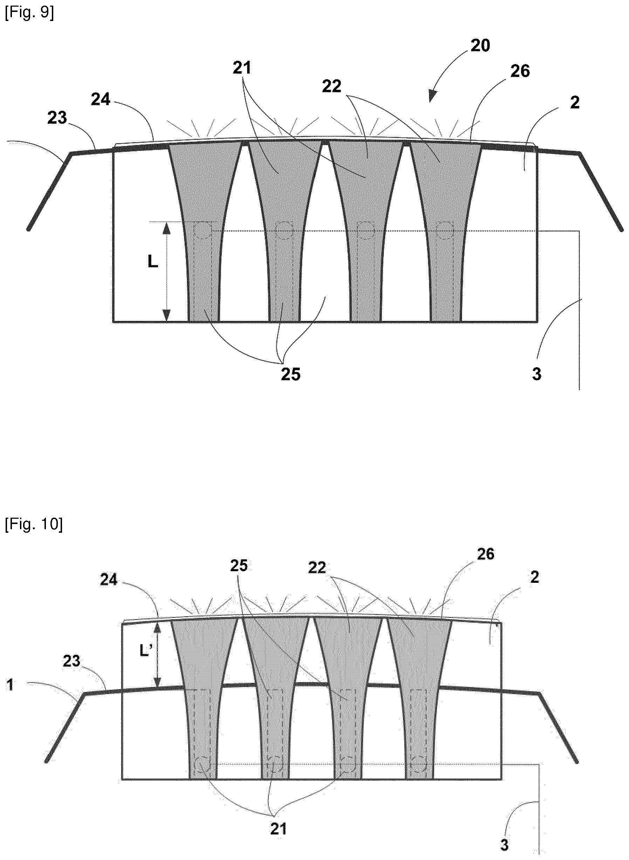

Une variante de réalisation pour éviter de rendre la piste d'entrée de la lumière 25 apparente depuis l'extérieur du véhicule est illustrée par les figures 9 et 10. Selon cette variante de réalisation du dispositif aérodynamique, la longueur L dans la direction longitudinale de la piste d'entrée de la lumière 25 est réduite de sorte que, en position déployée la piste de lumière demeure dans l'espace intérieur du becquet fixe 1. La longueur L' dont il est alors possible de faire sortir la lame mobile 2 est inférieure à la longueur L.

Cet arrangement prive donc la lame mobile 2 d'un déploiement important à défaut de disposer d'un becquet fixe 1 de longueur conséquente.

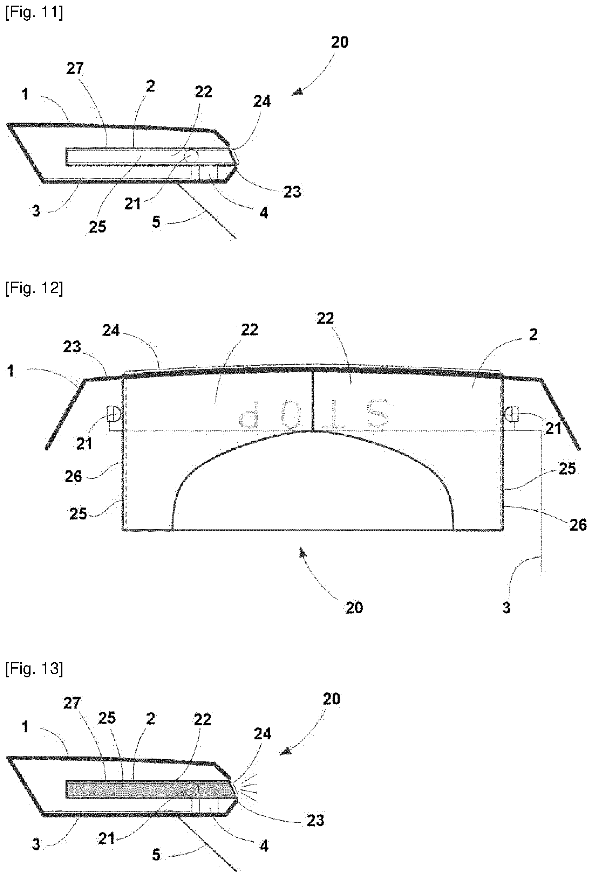

Un deuxième mode alternatif de réalisation du dispositif aérodynamique est illustré par les figures 11 à 16.

Selon cette seconde alternative, on s'arrange pour que la piste d'entrée de la lumière soit disposée sur une partie de la lame mobile ne présentant pas les inconvénients évoqués ci-dessus et fasse partie des éléments de signalisation participant à l'éclairage général de la lame mobile.

A cet effet, les pistes d'entrée de la lumière 25 sont disposées sur les faces latérales de la lame mobile ; et par voie de conséquences les sources de lumière 21 sont disposées en vis-à-vis sur les parois latérales du becquet fixe 1.

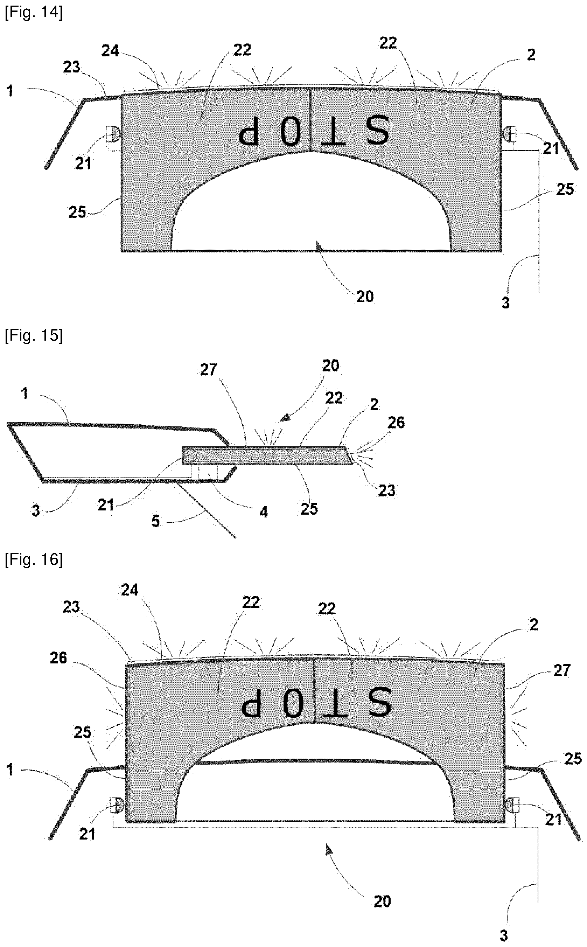

Les figures 13 et 14 illustrent le même dispositif aérodynamique selon le deuxième mode de réalisation lorsque la lame mobile est en position rétractée et que les sources de lumière sont activées.

Et les figures 15 et 16 illustrent le cas dans lequel la lame mobile est en position déployée et que les sources de lumière sont activées.

En référence à la figure 16, en position déployée et lorsque les sources de lumière sont activées, la lame mobile 2 présente un cordon continu de lumière sur sa face arrière disposée sur le bord de fuite 23 ainsi que sur ses faces latérales.

Comme cela a été exposé précédemment le guide de lumière est recouvert sur l'ensemble de sa surface, à l'exception des pistes d'entrée de la lumière et de la surface de sortie de la lumière disposée sur le bord de fuite d'une ou plusieurs couches de revêtement opaque 27.

Il est alors possible d'interrompre localement le revêtement 27 ne laissant pas passer la lumière de manière à créer des passages formant des motifs graphiques permettant à la lumière de sortir du guide de lumière diffusant 22.

Les figures 12, 14 et 16 illustrent le cas dans lequel le motif graphique est formé des lettres STOP.

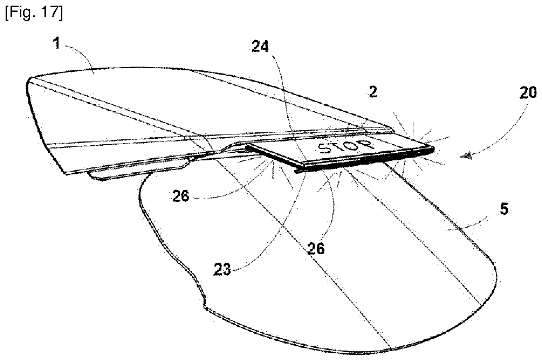

La figure 17 illustre une vue schématique en perspective selon ce deuxième mode alternatif de réalisation du dispositif aérodynamique lorsque la lame mobile est en position déployée et que la source de lumière est activée. Seuls, le bord de fuite 23, les bords latéraux et le motif lumineux placé sur la face supérieure de la lame mobile 2 émettent de la lumière lorsque la source de lumière est activée.

Les enseignements et les avantages liés à ce deuxième mode de réalisation sont similaires à ceux décrits ci-dessus pour le premier mode de réalisation.

Il va sans dire qu'il est possible de combiner les formes alternatives de réalisation de l'invention telles que décrites ci-dessus en formant par exemple un dispositif aérodynamique présentant des pistes d'entrée de la lumière 25 sur la face inférieure de la lame mobile 2 et des motifs lumineux sur la face supérieure de la lame mobile, ou encore présentant des pistes d'entrée de la lumière latérales et une face de sortie, disposée sur le bord de fuite, formée de motifs. Ou encore, moyennant une régulation de l'intensité lumineuse, une lame mobile formée d'une pièce unique en matériau diffusant ne comportant pas de revêtement opaque et émettant, en position déployée, de la lumière par chacune de ses faces externes lorsque la source de lumière 21 est activée.

### Nomenclature

- 1 :: Becquet fixe.
- 2 :: Lame mobile.
- 20 :: Dispositif lumineux.
- 21 :: Source de lumière.
- 22 :: Guide de lumière diffusant.
- 23 :: Bord de fuite.
- 24 :: Verrine de protection.
- 25 :: Piste d'entrée de la lumière.
- 26 :: Surface de sortie de la lumière.
- 27 :: Revêtement opaque.
- 3 :: Câble électrique.
- 4 :: Groupe motorisé.
- 5 :: Vitre arrière.

## Revendications

1. Dispositif aérodynamique pour véhicule automobile comprenant un becquet fixe (1) solidaire de la carrosserie et une lame mobile (2) coulissant dans l'espace intérieur du becquet fixe (1) selon un axe longitudinal (XX') entre une position retractée et une position déployée dans le prolongement arrière du becquet fixe (1), la lame mobile (2) comporte au moins un guide de lumière diffusant (22) comprenant au moins une piste d'entrée de la lumière (25) s'étendant longitudinalement et une ou plusieurs surfaces de sortie de la lumière (26) disposées sur une surface de la lame mobile (2) visible depuis l'extérieur du véhicule, **caractérisé en ce qu'**une ou plusieurs sources de lumière (21) sont disposées sur une paroi interne dudit espace intérieur du becquet fixe (1) en vis-à-vis et à proximité immédiate de chacune des pistes d'entrée de la lumière (25).

2. Dispositif aérodynamique selon la revendication 1, dans lequel une ou plusieurs surfaces de sortie de la lumière (26) sont disposées sur un bord de fuite (23) de la lame mobile (2).

3. Dispositif aérodynamique selon la revendication 1 ou la revendication 2, dans lequel au moins une source de lumière (21) est disposée en vis-à-vis d'une paroi latérale de la lame mobile (2).

4. Dispositif aérodynamique selon la revendication 1 ou la revendication 2, dans lequel au moins une source de lumière (21) est disposée en vis-à-vis d'une paroi inférieure de la lame mobile (2).

5. Dispositif aérodynamique selon l'une quelconque des revendications précédentes dans lequel la longueur et la position longitudinale des pistes d'entrée de la lumière (25) sont disposées de sorte que, en position déployée, les pistes d'entrée de la lumière (25) sont entièrement disposées dans l'espace intérieur du becquet fixe (1).

6. Dispositif aérodynamique selon l'une quelconque des revendications précédentes, dans lequel le au moins un guide de lumière diffusant (22) est recouvert sur l'intégralité de sa surface, à l'exception de la piste d'entrée de la lumière (25) et des surfaces de sortie de la lumière (26), d'une ou plusieurs couches de revêtement (27) ne laissant pas passer la lumière.

7. Dispositif aérodynamique selon la revendication 6, dans lequel le revêtement (27) comprend une première couche réfléchissant la lumière vers l'intérieur du guide de lumière diffusant (22).

8. Dispositif aérodynamique selon l'une quelconque des revendications 6 ou 7, dans lequel le revêtement (27) comprend des interruptions localisées formant des motifs par lesquelles la lumière émerge vers la surface extérieure de la lame mobile (2) pour former des motifs lumineux.

9. Dispositif aérodynamique selon l'une quelconque des revendications 1 à 8, dans lequel le matériau formant le au moins un guide de lumière diffusant (22) est distinct du matériau formant une partie structurelle de la lame mobile (2).

10. Dispositif aérodynamique selon la revendication 9, dans lequel la partie structurelle de la lame mobile (2) est formée d'un matériau thermoplastique surmoulé sur le au moins un guide de lumière diffusant (22).

11. Dispositif aérodynamique selon la revendication 9 dans lequel la partie structurelle de la lame mobile (2) et le au moins un guide de lumière diffusant (22) sont formés chacun d'un matériau thermoplastique et sont réalisés par bi-injection.

12. Dispositif aérodynamique selon l'une quelconque des revendications 1 à 8, dans lequel la lame mobile (2) est formée dans son intégralité d'un matériau faisant office de guide de lumière diffusant.

13. Dispositif aérodynamique selon l'une quelconque des revendications précédentes, dans lequel au moins une verrine de protection (24) en matière transparente est disposée sur les surfaces de sortie de la lumière (26) pour protéger lesdites surfaces de sortie de la lumière des agressions extérieures.

14. Dispositif aérodynamique selon la revendication 13, dans lequel une partie structurelle de la lame mobile (2) est formée d'un matériau thermoplastique surmoulée sur la verrine de protection (24).

15. Dispositif aérodynamique selon l'une quelconque des revendications précédentes dans lequel la ou les sources de lumière (21) sont collimatées, de sorte que les rayons lumineux pénètrent dans le au moins un guide de lumière diffusant (22) perpendiculairement à la surface de ladite piste d'entrée de la lumière (25).

16. Dispositif aérodynamique selon l'une quelconque des revendications précédentes dans lequel la ou les sources de lumière (21) sont formées par des diodes électroluminescentes.

## Patentansprüche

1. Aerodynamische Vorrichtung für Kraftfahrzeuge, die einen festen Spoiler (1) aufweist, der fest mit der Karosserie verbunden ist, und ein bewegliches Blatt (2), das im Innenraum des festen Spoilers (1) entlang einer Längsachse (XX') zwischen einer eingezogenen Position und einer ausgefahrenen Position in der hinteren Verlängerung des festen Spoilers (1) gleitet, wobei das bewegliche Blatt (2) mindestens einen streuenden Lichtleiter (22) aufweist, der mindestens eine sich in Längsrichtung erstreckende Lichteintrittsspur (25) und eine oder mehrere Lichtaustrittsflächen (26) aufweist, die auf einer von der Außenseite des Fahrzeugs sichtbaren Oberfläche des beweglichen Blatts (2) angeordnet sind, **dadurch gekennzeichnet, dass** eine oder mehrere Lichtquellen (21) an einer Innenwand des Innenraums des festen Spoilers (1) gegenüber und in unmittelbarer Nähe jeder der Lichteintrittsspuren (25) angeordnet sind.

2. Aerodynamische Vorrichtung nach Anspruch 1, bei der eine oder mehrere Lichtaustrittsflächen (26) an einer Hinterkante (23) des beweglichen Blatts (2) angeordnet sind.

3. Aerodynamische Vorrichtung nach Anspruch 1 oder 2, bei der mindestens eine Lichtquelle (21) gegenüber einer Seitenwand des beweglichen Blatts (2) angeordnet ist.

4. Aerodynamische Vorrichtung nach Anspruch 1 oder 2, bei der mindestens eine Lichtquelle (21) gegenüber einer unteren Wand des beweglichen Blatts (2) angeordnet ist.

5. Aerodynamische Vorrichtung nach einem der vorhergehenden Ansprüche, bei der die Länge und die Längsposition der Lichteintrittsspuren (25) so angeordnet sind, dass die Lichteintrittsspuren (25) in der ausgefahrenen Position vollständig im Innenraum des festen Spoilers (1) angeordnet sind.

6. Aerodynamische Vorrichtung nach einem der vorhergehenden Ansprüche, wobei |e mindestens ein streuender Lichtleiter (22) auf seiner gesamten Oberfläche, mit Ausnahme der Lichteintrittsspur (25) und der Lichtaustrittsflächen (26), mit einer oder mehreren nicht lichtdurchlässigen Beschichtungsschichten (27) bedeckt ist.

7. Aerodynamische Vorrichtung nach Anspruch 6, wobei die Beschichtung (27) eine erste Schicht aufweist, die Licht in das Innere des streuenden Lichtleiters (22) reflektiert.

8. Aerodynamische Vorrichtung nach einem der Ansprüche 6 oder 7, wobei die Beschichtung (27) lokalisierte musterbildende Unterbrechungen aufweist, durch die Licht zur Außenfläche des beweglichen Blatts (2) austritt, um Lichtmuster zu bilden.

9. Aerodynamische Vorrichtung nach einem der Ansprüche 1 bis 8, wobei das Material, das den mindestens einen streuenden Lichtleiter (22) bildet, von dem Material verschieden ist, das einen strukturellen Teil des beweglichen Blatts (2) bildet.

10. Aerodynamische Vorrichtung nach Anspruch 9, wobei der strukturelle Teil des beweglichen Blatts (2) aus einem thermoplastischen Material gebildet ist, das auf den mindestens einen streuenden Lichtleiter (22) aufgeformt ist.

11. Aerodynamische Vorrichtung nach Anspruch 9, bei der der strukturelle Teil des beweglichen Blatts (2) und der mindestens eine streuende Lichtleiter (22) jeweils aus einem thermoplastischen Material gebildet sind und durch Bi-Injektion hergestellt werden.

12. Aerodynamische Vorrichtung nach einem der Ansprüche 1 bis 8, bei der das bewegliche Blatt (2) in seiner Gesamtheit aus einem Material gebildet ist, das als streuender Lichtleiter fungiert.

13. Aerodynamische Vorrichtung nach einem der vorhergehenden Ansprüche, bei der mindestens ein Schutzglas (24) aus transparentem Material auf den Lichtaustrittsflächen (26) angeordnet ist, um die Lichtaustrittsflächen vor äußeren Einflüssen zu schützen.

14. Aerodynamische Vorrichtung nach Anspruch 13, bei der ein struktureller Teil des beweglichen Blatts (2) aus einem thermoplastischen Material gebildet wird, das auf das Schutzglas (24) aufgeformt wird.

15. Aerodynamische Vorrichtung nach einem der vorhergehenden Ansprüche, bei der die Lichtquelle(n) (21) kollimiert ist/sind, so dass die Lichtstrahlen in den mindestens einen streuenden Lichtleiter (22) senkrecht zur Oberfläche der Lichteintrittsspur (25) eintreten.

16. Aerodynamische Vorrichtung nach einem der vorhergehenden Ansprüche, bei der die Lichtquelle(n) (21) durch Leuchtdioden gebildet wird/werden.

## Claims

1. Aerodynamic device for a motor vehicle comprising a fixed spoiler (1) attached to the bodywork and a movable blade (2) sliding into the interior space of the fixed spoiler (1) along a longitudinal axis (XX') between a retracted position and a deployed position in the rear extension of the fixed spoiler (1),the movable blade (2) comprises at least one diffusing light guide (22) comprising at least one light entry track (25) extending longitudinally and one or more light-emitting surfaces (26) arranged on a surface of the movable blade (2) visible from outside the vehicle, **characterised in that** one or more light sources (21) are arranged on an inner wall of said inner space of the fixed spoiler (1) opposite and in the immediate vicinity of each of the light entry tracks (25).

2. Aerodynamic device according to claim 1, wherein one or more light-emitting surfaces (26) are arranged on a trailing edge (23) of the movable blade (2).

3. Aerodynamic device according to claim 1 or claim 2, wherein at least one light source (21) is arranged opposite a side wall of the movable blade (2).

4. Aerodynamic device according to claim 1 or claim 2, wherein at least one light source (21) is arranged opposite a lower wall of the movable blade (2).

5. Aerodynamic device according to any one of the preceding claims in which the length and longitudinal position of the light entry tracks (25) are arranged so that, in the deployed position, the light entry tracks (25) are fully arranged in the interior space of the fixed spoiler (1).

6. Aerodynamic device according to any one of the preceding claims, wherein at least one diffusing light guide (22) is covered over its entire surface, except the light entry track (25) and the light-emitting surfaces (26), with one or more layers of coating (27) not allowing light to pass through.

7. Aerodynamic device according to claim 6, wherein the coating (27) comprises a first layer reflecting light inwards of the diffusing light guide (22).

8. Aerodynamic device according to any one of claims 6 or 7, wherein the coating (27) comprises localized interruptions forming patterns by which the light emerges to the outer surface of the movable blade (2) to form luminous patterns.

9. Aerodynamic device according to any one of claims 1 to 8, wherein the material forming at least one diffusing light guide (22) is distinct from the material forming a structural part of the movable blade (2).

10. Aerodynamic device according to claim 9, wherein the structural part of the movable blade (2) is formed of a thermoplastic material overmolded on the at least one diffusing light guide (22).

11. Aerodynamic device according to claim 9 wherein the structural part of the movable blade (2) and at least one diffusing light guide (22) are each formed of a thermoplastic material and are made by bi-injection.

12. Aerodynamic device according to any one of claims 1 to 8, wherein the movable blade (2) is formed in its entirety of a material acting as a diffusing light guide.

13. Aerodynamic device according to any one of the preceding claims, wherein at least one protective glass (24) of transparent material is arranged on the light-emitting surfaces (26) to protect said light-emitting surfaces from external aggressions.

14. Aerodynamic device according to claim 13, wherein a structural part of the movable blade (2) is formed of a thermoplastic material overmolded on the protective glass (24).

15. Aerodynamic device according to any one of the preceding claims in which the light source (21) is collimated, so that the light rays penetrate into at least one diffusing light guide (22) perpendicular to the surface of said light entry track (25).

16. Aerodynamic device according to any one of the preceding claims wherein the light source (21) is formed by light-emitting diodes.
